Europäisches Patentamt

European Patent Office

Office européen des brevets

(19)

(11) Numéro de publication: **0 091 935**
**B1**

(12)

# FASCICULE DE BREVET EUROPEEN

(45) Date de publication du fascicule du brevet:
**25.06.86**

(51) Int. Cl.⁴: **F 27 B 13/12, C 04 B 35/52**

(21) Numéro de dépôt: **82903243.2**

(22) Date de dépôt: **27.10.82**

(86) Numéro de dépôt international:
**PCT/FR 82/00175**

(87) Numéro de publication internationale:
**WO 83/01677 (11.05.83** Gazette 83/11)

(54) **DISPOSITIF DE CHAUFFAGE POUR FOURS DE CUISSON OUVERTS A FEU TOURNANT ET PROCEDE DE MISE EN OEUVRE DE CE DISPOSITIF.**

(30) Priorité: **29.10.81 FR 8120613**

(43) Date de publication de la demande:
**26.10.83 Bulletin 83/43**

(45) Mention de la délivrance du brevet:
**25.06.86 Bulletin 86/26**

(84) Etats contractants désignés:
**CH DE LI NL SE**

(56) Documents cités:
**DE - C - 693 298**
**FR - A - 1 404 628**
**US - A - 2 699 931**
**US - A - 3 975 149**

(73) Titulaire: **ALUMINIUM PECHINEY, 28, rue de Bonnel, F-69433 Lyon Cedex 3 (FR)**

(72) Inventeur: **THOMAS, Jean-Claude, 358, Cité Amont, F-05120 L'Argentiére (FR)**

(74) Mandataire: **Pascaud, Claude et al, PECHINEY 28, rue de Bonnel, F-69433 Lyon Cedex 3 (FR)**

ACTORUM AG

## Description

Le dispositif de chauffage à contre-courant, qui fait l'objet de l'invention, concerne les fours de cuisson dits ouverts à feu tournant, dans lesquels un ensemble de chambres, souvent disposées en deux lignes parallèles, est chauffé par des gaz portés à température élevée, qui circulent dans des cloisons creuses. Ces cloisons qui divisent les chambres en compartiments sont elles-mêmes disposées en plusieurs files parallèles entre elles et aussi aux lignes de chambres.

Les cloisons d'une même file sont reliées entre elles, à leurs extrémités, pour permettre aux gaz de les parcourir en série. Les produits à chauffer sont entassés dans les compartiments en reçoivent la chaleur par conduction à travers les parois des cloisons. De tels fours sont utilisés, en particulier, pour la cuisson des produits carbonés, tels que, par exemple, les anodes en carbone des cellules d'électrolyse de l'aluminium. Dans chaque compartiment, les produits carbonés sont protégés de l'oxydation par une épaisse couche de matière carbonée en petits grains, qui les recouvre et remplit tous les espaces libres. Les compartiments restent ouverts à la partie supérieure.

L'une des difficultés importantes qu'on rencontre dans l'exploitation de tels fours est la réalisation, de façon reproductible, d'un cycle de chauffage et de refroidissement des produits, qui permette leur cuisson dans les conditions optimales. On connaît généralement bien le cycle de température qu'il convient d'imposer aux produits pour les cuire, mais la difficulté est d'obtenir que les produits, placés dans les différentes zones de chaque compartiment, subissent effectivement un cycle de température proche du cycle optimal.

Dans le cas de la cuisson des anodes en carbone, il est, en particulier, important que celles-ci soient portées à une température maximale d'au moins environ 1100°C pour obtenir les caractéristiques physico-chimiques souhaitées. Une surchauffe éventuelle des anodes placées dans les zones les plus chaudes peut entraîner une modification des caractéristiques physiques de celles-ci, par rapport aux caractéristiques de celles cuites à des températures moins élevées. Il en résulte une hétérogénéité des caractéristiques des lots d'anodes cuites obtenues, qui a, comme on le sait, des conséquences très défavorables sur les conditions de fonctionnement des cellules d'électrolyse de l'aluminium sur lesquelles seront montées les anodes. De plus, les surchauffes non contrôlées provoquent une détérioration accélérée des réfractaires et il en résulte une déformation rapide des cloisons de chauffage, dont la durée est ainsi réduite de façon trés notable.

De la façon la plus générale, le chauffage des cloisons dans la zone dite de cuisson, est effectué grâce à des moyens d'injection de combustible placés à la partie supérieure de ces cloisons. Un jet de combustible, tel qu'un fuel lourd ou un gaz combustible, est ainsi introduit dans un courant de gaz comburant préchauffé au préalable, le jet de fuel ou de gaz étant orienté dans le sens d'écoulement de ce gaz comburant.

Dans de nombreux cas, les cloisons comportent des chicanes permettant de faire circuler les gaz en zig zag, de haut en bas, puis de bas en haut et ainsi de suite.

L'expérience a montré que ce mode de chauffage des cloisons entraînait une surchauffe de la partie inférieure de celles-ci. Une telle surchauffe comme cela vient d'être dit, a pour conséquences, d'une part, une hétérogénéité des caractéristiques physiques des anodes qui sont cuites dans les chambres et, d'autre part, une déformation accélérée des cloisons dans la zone la plus chargée, qui réduit de façon très importante leur durée de vie.

On a donc recherché la possibilité d'éviter une telle surchauffe de ces cloisons dans la zone inférieure et, aussi, celle d'obtenir, une meilleure répartition des contraintes de déformation de ces cloisons afin de prolonger leur durée de vie de façon importante.

Le dispositif de chauffage pour four de cuisson ouvert à feu tournant, qui fait l'objet de l'invention, permet d'éviter ou de réduire la surchauffe des cloisons dans la zone inférieure. Il comporte des moyens d'injection d'un combustible liquide, gazeux ou même solide à l'intérieur d'une veine gazeuse comburante, le ou les jets de combustibles étant orientés à contre-courant, c'est-à-dire dans un sens opposé au sens de déplacement de la veine gazeuse comburante.

La description et les figures ci-après permettrons de mieux comprendre les caractéristiques des dispositifs de chauffage des fours de cuisson ouverts à feu tournant, utilisés en général, et celles du nouveau dispositif de chauffage qui fait l'objet de l'invention. Comme on le verra par ailleurs, l'invention concerne aussi un procédé qui permet de mieux répartir les déformations des briques qui constituent les cloisons, de façon à prolonger la durée de vie de celles-ci.

Fig. 1: vue en plan d'une partie d'un four de cuisson ouvert à feu tournant, de type connu;

Fig. 2: vue en élévation et en coupe des cloisons du four de la fig. 1;

Fig. 3: vue en élévation et en coupe de la disposition habituelle des injecteurs sur une cloison d'un four à feu tournant de type connu, selon l'art antérieur;

Fig. 4: vue en élévation et en coupe de la disposition à contre-courant, suivant l'invention, des injecteurs sur la cloison de la fig. 3.

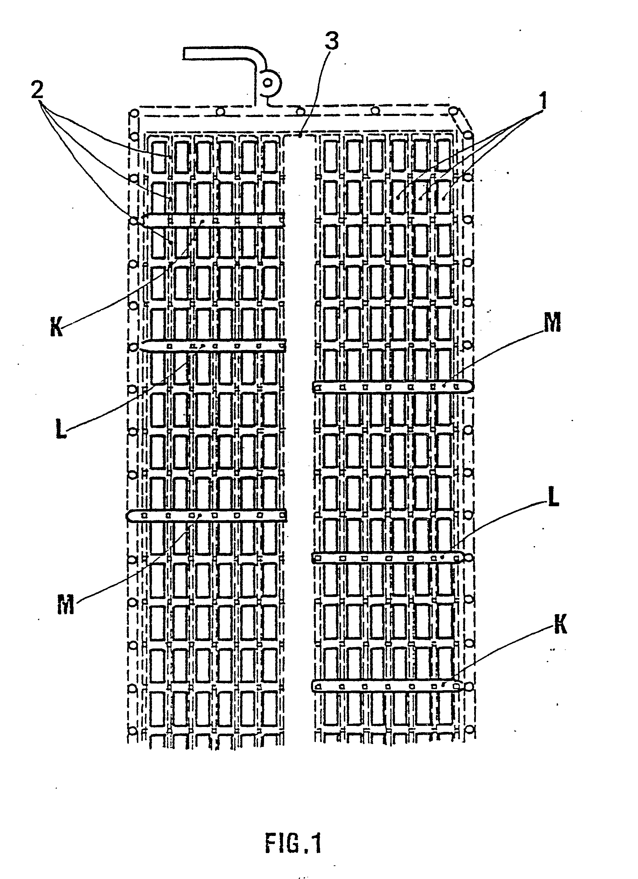

Le brevet US 2 699 931 décrit, comme le montre la fig. 1 (qui reproduit partiellement la fig. 1 du brevet cité) un four de cuisson à feu tournant comprenant 60 chambres, ou sections, disposées en deux rangées parallèles de 30 chambres, dont 28 sont visibles sur la figure. Chaque chambre comprend six compartiments côte à côte tels que (1) dans lesquels on place les produits à cuire recouverts par une matière de remplissage. Entre les compartiments, des cloisons creuses telles que (2) sont disposées en file de façon que les gaz puissent parcourir en série les cloisons faisant partie d'une même file. En extrémité, une canalisation de bouclage (3) permet de raccorder les circuits de gaz d'une rangée à l'autre.

Le brevet US-A-3975149 décrit également un four de cuisson à feu tournant que l'on peut considérer à l'heure actuelle, comme la solution classique mise en oeuvre dans la plupart des usines productrices d'aluminium dans le monde. Dans ce type de four, la flamme des brûleurs est dirigée à co-courant des veines gazeuses de gaz comburants.

En exploitation, le cycle de chauffage puis de refroidissement des produits s'effectue grâce à un système dit de feu tournant qui s'applique à un groupe de chambres disposées en série, dans lequel un certain nombre de chambres sont en préchauffage, quelques-unes en cuisson et, enfin, quelques-unes en refroidissement.

L'emplacement d'un tel groupe dans l'ensemble de chambres, qui constitue le four est déterminé par les points de raccordement respectifs de la canalisation d'arrivée d'air froid (K), de la rangée de brûleurs de chauffage (L) et, enfin, de la canalisation d'extraction des gaz brûlés (M). Après un temps de maintien de l'ordre de 16 à 48 h, on déplace d'une chambre les points de raccordement des canalisations d'arrivée d'air (K) et de départ des gaz brûlés (M) ainsi que la rangée de brûleurs (L). Ce déplacement est effectué dans le sens de parcours de l'air et des gaz brûlés. Comme le montre la fig. 1, plusieurs feux tournants peuvent parcourir les chambres d'un même four à la même cadence.

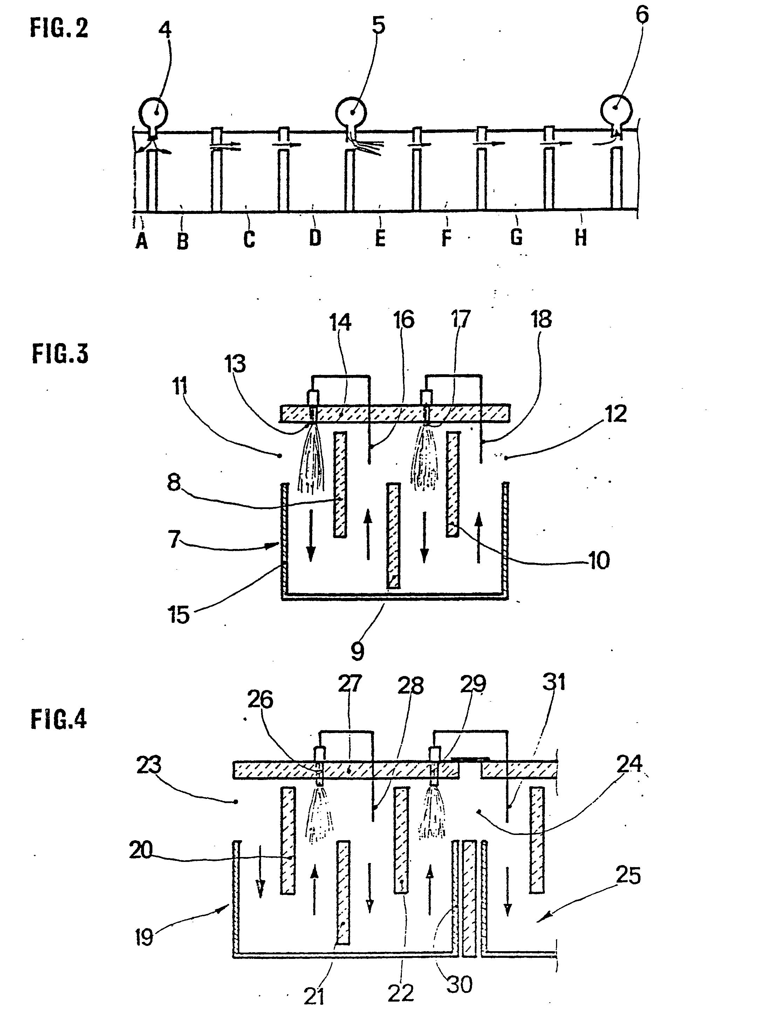

La fig. 2 représente en coupe ce qui se passe à l'intérieur d'une file de cloisons faisant partie d'un même groupe de chambres. On voit qu'une partie au moins de l'air froid qui est introduit par la canalisation (4) au niveau de la séparation entre les cloisons (A) et (B), traverse la cloison (B), puis les deux suivantes (C) et (D), qui correspondent à des chambres en refroidissement, ce qui l'échauffe progressivement. Au moment où cette veine d'air, qui a été ainsi préchauffée vers 500°C, passe de la cloison (D) à la cloison (E), un injecteur (5) envoie dans cette veine un jet de ful, dans le même sens que le sens d'écoulement de la veine. Ce jet pénètre dans la cloison (E) en brûlant au contact de l'air très chaud qui parcourt cette cloison. Au-delà, les gaz de combustion traversent les cloisons des chambres (F), (G) et (H), en les préchauffant et, enfin, sortent par la canalisation (6) qui évacue les gaz en direction de la cheminée.

On comprend qu'avec une disposition des brûleurs telle qu'elle est représentée sur la fig. 2, il soit très difficile d'obtenir une certaine homogénéité de température de la cloison dans laquelle se produit la combustion, compte tenu de l'étroitesse relative de l'espace réservé au passage des gaz à l'intérieur de la cloison. Il est, du reste, indiqué dans le brevet US-A-2699931 cité que, pour mieux répartir les températures, on peut envisager de disposer, à l'intérieur des cloisons, des chicanes permettant de faire circuler les gaz suivant un parcours tortueux.

La fig. 3 représente une cloison creuse (7) comparable dans son principe aux cloisons des fig. 1 et 2, qui a été aménagée de façon à favoriser les échanges de chaleur entre ses parois et les gaz qui parcourent son volume intérieur. On a cherché à obtenir un balayage des parois par les gaz sur toute la hauteur et la longueur de la cloison. Pour cela, on dispose, dans l'espace creux intermédiaire de la cloison (7), des chicanes verticales (8), (9) et (10) enserrées entre les deux grandes parois de la cloison. Ces chicanes obligent donc la veine gazeuse provenant de la cloison précédente, qui entre par l'orifice de raccordement (11), à parcourir la cloison en zig zag suivant les flèches pour sortir finalement par l'orifice (12) de raccordement à la cloison suivante.

L'injecteur (13), qui traverse le couvercle (14) de la cloison, pulvérise un jet de fuel dirigé de haut en bas, qui s'enflamme au contact de l'air chaud qui, après avoir pénétré par l'orifice (11), se dirige vers le bas grâce à la chicane (8) et à la paroi (15) de la cellule. Suivant les caractéristiques de fuel utilisé, la combustion se poursuit sur une longueur de parcours plus ou moins grande, puis les gaz chauds continuent leur parcours en zig zag jusqu'à l'orifice de sortie. Un couple thermoélectrique (16) de régulation de la température est généralement disposé hors de la vue directe de la flamme, derrière la chicane (8) au voisinage du haut de la cellule. Dans bien des cas, pour améliorer la répartition du chauffage, un deuxième injecteur (17) est placé dans la zone où le flux gazeux redescend en direction du fond de la cloison entre les chicanes (9) et (10). Il est, à son tour, régulé par un couple thermoélectrique (18) séparé de brûleur par la cloison (10). Dans certains cas, le couple thermoélectrique (16) est supprimé et c'est le couple thermoélectrique (18) qui régule les deux injecteurs (13) et (17). Les essais ont montré qu'une telle disposition des chicanes, ainsi que des injecteurs et de leurs couples de régulation, donnait des résultats relativement favorables en ce qui concerne l'efficacité des échanges thermiques, entre les gaz chauds et les produits contenus dans les compartiments, par conduction à travers les parois des cellules.

Par contre, de sérieuses difficultés ont été rencontrées pour obtenir verticalement une répartition homogène des températures et, plus particulièrement, dans le cas d'un chauffage au fuel. Habituellement, on observe les températures les plus élevées au fond des cloisons et, les plus basses, au sommet. Il est clair que, dans ces conditions, les produits placés au fond atteignent un degré de cuisson plus élevé que ceux du sommet. D'autre part, en ce qui concerne les parois des cloisons, on a observé des déformations très importantes par fluage des structures en briques réfractaires qui les constituent, au voisinage du fond, c'est-à-dire dans la région où les briques supportent la charge de tout l'empilement.

Si on veut éviter de telles déformations en abaissant la température de réglage, on constate que, dans bien des cas, la température atteinte dans les zones supérieures des compartiments n'est plus suffisante pour une cuisson correcte des produits. Les mesures de température effectuées à l'intérieur des cloisons, au moyen de couples permettant d'enregistrer les températures atteintes simultanément dans plusieurs emplacements répartis dans ces cloisons, on fait apparaître des écarts de température pouvant atteindre 150°C ou davantage entre le haut et le bas de ces cloisons, les températures maximales étant toujours atteintes dans le fond des cloisons, dans les zones situées dans le prolongement de l'axe des injecteurs. On a recherché la possibilité de réduire de façon très importante les écarts de température existant entre les zones supérieures et inférieures des cloisons, sans apporter de modifications notables à la structure proprement dite de ces cloisons creuses, structure qui résulte d'une optimisation progressive basée sur une longue expérience.

Le dispositif et le procédé suivant l'invention permettent de réduire les écarts de température ainsi que les déformations des cloisons de façon simple et efficace.

L'objet de la présente invention est un procédé permettant de prolonger la durée de vie des cloisons chauffantes d'un four de cuisson ouvert, à feu tournant muni à sa partie supérieure d'injecteurs délivrant un jet de combustible dirigé vers le bas à la rencontre d'un courant de gaz comburant, lesdites cloisons comportant une pluralité de chicanes verticales fixées alternativement à la partie supérieure et à la partie inférieure des cloisons, de telle sorte que la veine de gaz comburant qui parcourt les cloisons circule, successivement du bas vers le haut et du haut vers le bas.

Selon ce procédé et dans le but de réduire la longueur de la flamme formée à la sortie des injecteurs, on dispose lesdits injecteurs, pendant au moins une partie du temps de chauffage des cloisons, au-dessus d'une zone dans laquelle la veine de gaz comburant circule vers le haut, à contre-courant du combustible injecté et de la flamme. En outre, au cours de la durée de vie des cloisons et en vue d'uniformiser l'usure de ces cloisons, on déplace les injecteurs de façon qu'ils se trouvent tantôt au-dessus d'une zone dans laquelle la veine de gaz comburant circule à contre-courant du jet de combustible, tantôt au-dessus d'une zone dans laquelle la veine de gaz comburant circule à co-courant du jet de combustible.

Un autre objet de la présente invention est un dispositif, pour la mise en oeuvre du procédé ci-dessus, dispositif comportant un moyen (26) d'injection de combustible situé entre deux chicanes successives, dirigé vers le bas, et déplaçable de façon que le jet de combustible soit à co-courant ou à contre-courant de la veine de gaz comburant.

La fig. 4 représente, de façon non limitative, un mode de réalisation du nouveau dispositif selon l'invention. La cloison (19), dont les chicanes (20), (21) et (22) sont disposées de la même façon que dans le cas de la cloison (7), est parcourue en zig zag par une veine gazeuse qui entre dans la cloison par l'orifice (23), puis la parcourt suivant le sens des flèches jusqu'à l'orifice de sortie (24) qui raccorde la cloison (19) à la cloison (25). Un injecteur de combustible (26), qui traverse le couvercle (27) de la cloison (19), envoie un jet de fuel lourd dirigé de haut en bas dans la zone comprise entre les chicanes (20) et (21), zone dans laquelle la veine gazeuse se dirige de bas en haut. Le couple thermoélectrique de contrôle et/ou de régulation de la température (28) est placé à la partie supérieure de la zone comprise entre les chicanes (21) et (22), de façon que, grâce à la position basse de la chicane (21), il soit en vue d'une partie au moins de la flamme résultant de la combustion du combustible projeté à partir de l'injecteur (26).

Comme le montre également la fig. 4, il est possible de placer dans la même cloison un deuxième injecteur (29), dans la zone comprise entre la chicane (22) et la paroi (30), qui sépare la cloison (19) de la cloison suivante (25). Cet injecteur est également disposé, comme le montre la fig. 4, de façon que le sens du jet de combustible qu'il projette, soit orienté à contre-courant de la veine gazeuse qui remonte de bas en haut. Le fonctionnement de ce deuxième injecteur (29) est contrôlé et/ou régulé par un deuxième couple thermoélectrique (31), qui est placé à la partie supérieure de la cloison suivante (25) en contact avec la veine gazeuse qui sort de la cloison (19) par l'orifice (24).

Des essais pratiques d'exploitation ont été effectués sur un même four de cuisson à feu tournant, comportant des chambres équipées de cloisons du type représenté aux fig. 3 et 4, et comportant soit des dispositifs classiques d'injection de combustible dans les cloisons des chambres en cuisson, comme ceux représentés à la fig. 3, soit, au contraire, des dispositifs d'injection à contre-courant suivant l'invention, comme ceux représentés à la fig. 4. Le combustible utilisé était un fuel lourd. Les cloisons avaient environ 4,5 m de hauteur et 5 m de longueur pour une largeur intérieure de 0,250 m.

Les essais comparatifs de cuisson de produits carbonés ont montré que, toutes choses égales par ailleurs, les températures des parois des cloisons sont beaucoup mieux réparties en utilisant le nouveau dispositif d'injection à contre-courant suivant l'invention.

Les mesures de température ont été effectuées au voisinage de l'axe des injecteurs dans la paroi réfractaire de la cloison, en haut de celle-ci, à mi-hauteur et en bas.

Le tableau ci-après donne les résultats obtenus:

Température moyenne des cloisons au voisinage de l'axe des injecteurs en °C

| | Injection dans le sens de la veine gazeuse | Injection à contre-courant |
|---|---|---|
| Température mesurée par les thermocouples de régulation | 1170 | 1222 |
| Température en haut de la cloison | 1175 | 1180 |

| Température à mi-hauteur de la cloison | 1285 | 1290 |
|---|---|---|
| Température en bas de la cloison | 1295 | 1180 |

On voit que, dans le dispositif classique, le bas des cloisons atteint une température moyenne de 1295°C. En fait, dans bien des cas, cette température dépasse 1300°C, et ceci est une cause de déformation par fluage, qui réduit de façon très importante la durée de vie. Dans le haut de la cloison, la température moyenne est inférieure de 120°C, tandis que, au milieu, cette température est seulement légèrement inférieure à celle du bas. On constate aussi que la température du fond dépasse de plus de 120°C celle qui est fixée comme consigne à la régulation, ce qui enlève à cette régulation toute la précision que l'on attend d'elle.

Au contraire, dans le cas du fonctionnement à contre-courant, les températures des cloisons, en haut et en bas, sont pratiquement égales, tandis qu'à mi-hauteur, la température est supérieure d'environ une centaine de degrés. Une telle répartition des températures est beaucoup plus favorable. En effet, la partie basse de la cloison, dans laquelle les briques supportent la plus forte charge, se trouve alors à une température plus faible qu'à mi-hauteur, et résiste donc beaucoup mieux au fluage. Par ailleurs, la zone supérieure, qui est généralement trop froide, se trouve à une température au moins égale à celle du fond, ce qui est particulièrement favorable pour l'homogénéité de la cuisson. Enfin, on a constaté que la disposition adoptée pour les thermocouples de régulation, exposant ceux-ci à une partie des flammes d'injection, améliore considérablement la précision et la sensibilité de l'équipement de régulation.

Les essais ont montré que l'utilisation du dispositif suivant l'invention permet d'augmenter de 30% environ la durée de vie des cloisons de ces fours. En effet, la déformation des cloisons par fluage rend généralement nécessaire leur remplacement, dans le cas de la cuisson des produits carbonés, à des intervalles de temps de l'ordre de deux années. L'utilisation du dispositif d'injection suivant l'invention permet de prévoir une augmentation moyenne de six à huit mois de la durée de vie des cloisons, ce qui représente une économie importante.

Cet avantage de l'injection à contre-courant est particulièrement important quand on utilise des fuels lourds du type de celui qui correspond à l'essai décrit. En effet, lorsqu'on injecte de tels fuels dans le sens du courant gazeux, la surchauffe des bas de cloisons est particulièrement élevée. Ceci est dû à la combustion lente de ces fuels dont la température de vaporisation est élevée. L'effet du contre-courant qui freine considérablement la chute des gouttelettes de fuel est particulièrement sensible. D'autre part, dans le cas du fuel, une grande partie de la chaleur est émise par le rayonnement de la flamme.

Dans le cas de la disposition classique, le thermocouple étant isolé des flammes par une chicane, ne prend pas en compte ce rayonnement qui, par contre, affecte directement les briques environnantes. A contre-courant, par contre, le thermocouple est exposé à la flamme, il peut ainsi recevoir, de façon directe, son rayonnement.

L'avantage de l'injection à contre-courant suivant l'invention, quoique moins important, est également observé dans le cas de l'injection de fuels plus légers, et aussi, quoique de façon nettement moins sensible, dans le cas de l'injection de combustibles gazeux tels que, par exemple, le gaz naturel. Dans le cas du gaz naturel, le problème posé par la vaporisation lente des gouttelettes d'hydrocarbures n'existe pas en effet, et l'on observe verticalement une distribution des températures plus régulière.

Cependant, suivant le type d'injecteur à gaz utilisé, la flamme peut avoir un rayonnement calorifique aussi élevé que celui d'une flamme de fuel. Dans ce cas, la position du thermocouple offrant l'exposition à la flamme que permet le contre-courant, est décisive pour la précision et la sensibilité de la régulation.

Dans le cas où sont utilisés des injecteurs à gaz qui, dans l'une ou l'autre des deux positions, donnent une répartition des températures assez peu différente, il est cependant intéressant, pour prolonger la durée de vie des cloisons, d'utiliser simultanément les deux modes de combustion, les injecteurs étant disposés alternativement dans le sens du courant ou à contre-courant.

Dans le cas où le four comporte un seul feu, on modifie à intervalles de temps réguliers la position des injecteurs.

Dans le cas d'un four à plusieurs feux, on peut faire fonctionner systématiquement un feu dans une position, et l'autre, dans la position contraire. La partie des cloisons, qui est la plus sujette aux déformations, est, en effet, celle qui se trouve directement sous les injecteurs. La disposition préconisée permet alors de répartir l'action thermique des flammes issues des injecteurs sur l'ensemble de la cloison. Il en résulte un ralentissement de la déformation des cloisons dans le temps.

**Revendications**

1. Procédé, permettant de prolonger la durée de vie des cloisons chauffantes d'un four de cuisson ouvert, à feu tournant muni à sa partie supérieure d'injecteurs (13) délivrant un jet de combustible dirigé vers le bas à la rencontre d'un courant de gaz comburant, lesdites cloisons (7) comportant une pluralité de chicanes verticales (8), (9) et (10) fixées alternativement à la partie supérieure et à la partie inférieure des cloisons, de telle sorte que la veine de gaz comburant qui parcourt les cloisons circule, successivement du bas vers le haut et du haut vers le bas, ce procédé étant caractérisé en ce que, dans le but de réduire la longueur de la flamme formée à la sortie des injecteurs, on dispose lesdits injecteurs, pendant au moins une partie du temps de chauffage des cloisons, au-dessus d'une zone dans laquelle la veine de gaz comburant circule vers le haut, à contre courant du combustible injecté et de la flamme.

2. Procédé selon revendication 1, caractérisé en ce que, au cours de la durée de vie des cloisons et en vue d'uniformiser l'usure de ces cloisons, on déplace les injecteurs de façon qu'ils se trouvent tantôt au-dessus d'une zone dans laquelle la veine de gaz comburant circule à contre-courant du jet de combustible, tantôt au-dessus d'une zone dans laquelle la veine de gaz comburant circule à co-courant du jet de combustible.

3. Dispositif, pour la mise en oeuvre du procédé, selon revendication 1 ou 2, caractérisé en ce qu'il comporte un moyen (26) d'injection de combustible situé entre deux chicanes successives, dirigé vers le bas, et déplaçable de façon que le jet de combustible soit à co-courant ou à contre-courant de la veine de gaz comburant.

4. Dispositif, selon revendication 3, caractérisé en ce que le combustible injecté est gazeux, liquide ou solide.

5. Dispositiv, selon revendication 3, caractérisé en ce qu'il comporte un moyen (28) de contrôle et/ou de réglage de la température disposé entre deux chicanes (20, 21) à la partie supérieure d'une zone adjacente à la zone dans laquelle se trouve l'injecteur (26), de façon à être en vue d'une partie au moins de la flamme qui se forme à la sortie dudit injecteur.

## Claims

1. A process for prolonging the operating life of the heating partitions of an open circulatory-firing baking furnace which is provided in its upper part with injectors (13) for supplying a jet of fuel directed downwardly to meet a flow of combustion-supporting gas, said partitions (7) comprising a plurality of vertical baffles (8), (9) et (10) fixed alternately to the upper part and the lower part of the partitions, in such a way that the flow of combustion-supporting gas which passes through the partitions circulates successively from the bottom upwardly and from the top downwardly, the process being characterised in that, in order to reduce the length of the flame which is formed at the outlet of the injectors, said injectors, for at least a part of the time for heating the partitions, are disposed above a region in which the flow of combustion-supporting gas is upwardly, in counter-flow relationship to the injected fuel and the flame.

2. A process according to claim 1 characterised in that, in the course of the operating life of the partitions and in order to render wear of said partitions uniform, the injectors are displaced in such a way that they are sometimes above a region in which the flow of combustion-supporting gas is in counter-flow relationship to the jet of fuel and sometimes above a region in which the flow of combustion-supporting gas is in co-flow relationship with the jet of fuel.

3. Apparatus for carrying out the process according to claim 1 or claim 2 characterised in that it comprises a fuel injecting means (26) disposed between two successive baffles, directed downwardly and displaceable in such a way that the jet of fuel is in co-flow or counter-flow relationship with the flow of combustion-supporting gas.

4. Apparatus according to claim 3 characterised in that the injected fuel is gaseous, liquid or solid.

5. Apparatus according to claim 3 characterised in that it comprises a means (28) for monitoring and/or controlling temperature which is disposed between two baffles (20, 21) in the upper part of a region adjacent to the region in which the injector (26) is disposed, in such a way as to be in sight of a part at least of the flame which is formed at the outlet of said injector.

## Patentansprüche

1. Verfahren zur Verlängerung der Lebensdauer von heizenden Wänden eines offenen Brennofens mit umlaufender Flamme, der an seinem Oberteil mit Einspritzdüsen (13) versehen ist, die einen Brennstoffstrahl liefern, der nach unten gegen einen Brenngasstrom gerichtet ist, wobei die Wände eine Vielzahl von senkrechten Schikanen (8, 9, 10) aufweisen, die abwechselnd am Oberteil und am Unterteil der Wände derart befestigt sind, dass der die Wände durchsetzende Brenngasstrom aufeinanderfolgend von unten nach oben und von oben nach unten gerichtet ist, dadurch gekennzeichnet, dass man zur Verlängerung der Länge der am Austritt der Einspritzdüsen gebildeten Flamme die Einspritzdüsen während wenigstens eines Teils der Heizzeit der Wände über einer Zone anordnet, in der der Brenngasstrom im Gegenstrom zum eingespritzten Brennstoff und zur Flamme nach oben zirkuliert.

2. Verfahren nach Anspruch 1, dadurch gekennzeichnet, dass man im Verlauf der Lebensdauer der Wände und zum Vergleichmässigen der Abnutzung dieser Wände die Einspritzdüsen derart verschiebt, dass sie sich bald über einer Zone befinden, in der der Brenngasstrom im Gegenstrom zum Brennstoffstrahl zirkuliert, und bald über einer Zone befinden, in der der Brenngasstrom im Gleichstrom zum Brennstoffstrahl zirkuliert.

3. Vorrichtung zur Durchführung des Verfahrens nach Anspruch 1 oder 2, dadurch gekennzeichnet, dass sie eine Einrichtung (26) zur Einspritzung von Brennstoff aufweist, die sich zwischen zwei aufeinanderfolgenden Schikanen befindet, nach unten gerichtet und derart verschiebbar ist, dass der Brennstoffstrahl sich im Gleichstrom oder im Gegenstrom zum Brenngasstrom befindet.

4. Vorrichtung nach Anspruch 3, dadurch gekennzeichnet, dass der eingespritzte Brennstoff gasförmig, flüssig oder fest ist.

5. Vorrichtung nach Anspruch 3, dadurch gekennzeichnet, dass sie eine Einrichtung (28) zur Kontrolle und/oder Regelung der Temperatur aufweist, die zwischen zwei Schikanen (20, 21) am Oberteil einer Zone angeordnet ist, die an die Zone angrenzt, in der sich die Einspritzdüse (26) befindet, und zwar derart, dass sie sich im Sichtbereich wenigstens eines Teils der Flamme befindet, die sich am Austritt der Einspritzdüse bildet.

FIG.1

**FIG.2**

**FIG.3**

**FIG.4**